# EUROPEAN PATENT APPLICATION

(11) **EP 4 817 897 A1**
(43) Date of publication of application: **07.10.2026**
(21) Application number: 25878706.8
(22) Date of filing: 02.07.2025
(51) Int. Cl.: B60D 1/30, A01D 34/00

(54) **FRONT STRUCTURE AND GARDEN ROBOT**

(30) Priority: 15.10.2024 CN 202422488989 U; 15.10.2024 CN 202422488954 U
(71) Applicant: Shenzhen Hanyang Technology Co., Ltd., Shenzhen, Guangdong 518000 (CN)
(72) Inventor: ZHU, Taotao, Shenzhen, Guangdong 518000 (CN); SONG, Yongqi, Shenzhen, Guangdong 518000 (CN); CHEN, Weiyue, Shenzhen, Guangdong 518000 (CN)
(74) Representative: Abel & Imray LLP
(86) International application number: PCT/CN2025/106654
(87) International publication number: WO 2026/081562

(57) **Abstract**

The present application specifically relates to a vehicle head structure and a yard robot. The vehicle head structure includes a yard function actuator, a mounting frame, a first rotating shaft, and a connecting seat. The first rotating shaft is rotatably connected to the mounting frame. The connecting seat is provided at the first rotating shaft, and the connecting seat and the first rotating shaft rotate synchronously. A first fastener is provided between the garden function actuator and the connecting seat for detachable connection. The mounting frame is provided with an access hole, and the access hole is aligned with the first fastener, allowing external force to be applied to disassemble and assemble the first fastener through the access hole.

## Description

### TECHNICAL FIELD

The present application relates to the technical field of intelligent device, and in particular to a vehicle head structure and a yard robot.

### BACKGROUND

In the related art, yard robots can assist users with daily garden maintenance tasks and have various functions, such as mowing, snow removal, and leaf blowing. The garden function actuator of the yard robot is provided at the vehicle head. To provide the head of the yard robot with rotational freedom, the inventor made the garden function actuator rotate around a shaft. However, the inventor found that when only the yard function actuator needed to be repaired, the shaft needed to be removed from the mounting frame before the yard function actuator could be separated from the rear mounting frame. After the repair was completed, the shaft needs to be reassembled to the mounting frame before the yard function actuator could be reassembled, which required additional work and needed to be improved. At the same time, the inventor found that since the swing of the vehicle head requires a large space, a large avoidance space needs to be reserved between the vehicle head and the vehicle body to prevent interference between the vehicle head and the vehicle body due to the swing of the vehicle head. However, the reserved avoidance space will cause the gap between the vehicle head and the vehicle body to be too large, which in turn affects the overall size of the yard robot and needs to be improved.

The above content is only used to assist in understanding the technical solution of the present application and does not constitute an admission that the above content is related art.

### SUMMARY

In light of this, the present application provides a vehicle head structure and a yard robot, aiming to address the problem in the related art that maintenance personnel are inconvenient and need to disassemble other parts when repairing the garden function actuator, which is time-consuming and labor-intensive.

To achieve one, some, or all of the above objectives, or other objectives, the present application provides a vehicle head structure, including:
a yard function actuator;
a mounting frame;
a first rotating shaft rotatably connected to the mounting frame; and
a connecting seat provided at the first rotating shaft and rotating synchronously with the first rotating shaft,
a first fastener is provided between the yard function actuator and the connecting seat for a detachable connection; and
the mounting frame is provided with an access hole, and the access hole is aligned with the first fastener, allowing external force to be applied to disassemble and assemble the first fastener through the access hole.

The present application proposes a vehicle head structure, including:
a yard function actuator;
a connecting seat;
a mounting frame;
a first rotating shaft rotatably connected to the mounting frame; and
a vehicle head body connected to the first rotating shaft and rotating synchronously with the first rotating shaft,
a first fastener is provided between the yard function actuator and the connecting seat for detachable connection, and the connecting seat is provided at the first rotating shaft;
a first swinging member is provided at the first rotating shaft and rotates along with the first rotating shaft;
the mounting frame is provided with a limiting structure, and the limit structure is formed with a first retaining wall and a second retaining wall spaced apart from each other; the first swinging member is located between the first retaining wall and the second retaining wall, and the first retaining wall and the second retaining wall cooperate to limit a rotational range of the first swinging member.

The present application further proposes a yard robot, including the vehicle head structure as described above and a vehicle body. The vehicle head structure is detachably connected to the vehicle body.

Implementing the embodiments of the present application provides the following beneficial effects:
the first fastener is provided between the yard function actuator and the connecting seat for detachable connection, and the access hole is provided to exposes the first fastener to the outside, allowing maintenance personnel to manually or with a tool remove the first fastener through the access hole, thereby separating the yard function actuator from the connecting seat. The maintenance personnel can directly detach the yard function actuator without having to remove the first rotating shaft from the mounting frame, simplifying the assembly and disassembly process. The present application has a simple structure and low cost, making it easier for maintenance personnel to disassemble and install, avoiding unnecessary steps.

This solves the problem in the related art where the maintenance personnel are inconvenient when repairing the vehicle head and yard function actuator and need to additionally disassemble other parts, which is time-consuming and labor-intensive.

The present application utilizes a limiting structure to limit the rotational range of the first swinging member, thereby limiting the rotational range of the vehicle head body. Since the terrain on which a yard robot travels is typically relatively uneven, a large swinging range of the vehicle head body is not required. Therefore, by limiting the rotation range of the vehicle head body, the need for the vehicle head body to adapt to uneven ground can be met while avoiding large rotation of the vehicle head body relative to the vehicle body. Furthermore, while the vehicle head body and the vehicle body do not interfere with each other, the avoidance space required to be reserved between the two can be reduced, narrowing the gap between the vehicle head body and the vehicle body and avoiding the situation where the overall size of the yard robot is too large.

The present application solves the problem in the related art that the vehicle head of the yard robot swings, resulting in a large gap between the vehicle head and the vehicle body, which affects the overall size of the yard robot.

Details of one or more embodiments of the present application are set forth in the following drawings and description. Other features and advantages of the present application will become apparent from the description, drawings, and claims.

### BRIEF DESCRIPTION OF THE DRAWINGS

To more clearly illustrate the technical solutions in the embodiments of the present application or in the related art, accompanying drawings required for use in the description of the embodiments or related art will be described briefly below. Obviously, the drawings described below are some embodiments of the present application. For those skilled in the art, other drawings can also be obtained based on these drawings without inventive effort.
FIG. 1 is a rear view of a partial structure of a vehicle head structure according to an embodiment.
FIG. 2 is an exploded view of a partial structure of the vehicle head structure according to an embodiment.
FIG. 3 is a perspective view of the vehicle head structure according to an embodiment.
FIG. 4 is an exploded view of a partial structure of the vehicle head structure according to an embodiment.
FIG. 5 is a perspective view of a partial structure of the vehicle head structure according to an embodiment.
FIG. 6 is a perspective view of the vehicle head structure according to an embodiment.
FIG. 7 is a top view of a yard robot according to an embodiment.
FIG. 8 is a cross-sectional view of a partial structure of the vehicle head structure according to an embodiment.
FIG. 9 is an exploded view of a partial structure of the vehicle head structure according to an embodiment.
FIG. 10 is a perspective view of a first swinging member and a limiting structure according to an embodiment.
FIG. 11 is an exploded view of a partial structure of the vehicle head structure according to an embodiment.
FIG. 12 is an exploded view of a partial structure of the vehicle head structure according to an embodiment.
FIG. 13 is a side view of the vehicle head structure according to an embodiment.
FIG. 14 is a top view of the yard robot according to an embodiment.

### Description of reference signs:

1. yard function actuator; 11. bracket; 12. second rotating shaft; 121. second positioning groove; 13. bearing; 14. mowing module; 141. first lifting mechanism; 1411. first drive device; 1412. guide structure; 1413. lifting frame; 142. cutter disc unit; 15. moving wheel module; 151. second lifting mechanism; 152. moving wheel; 2. mounting frame; 21. rear end wall; 211. access hole; 22. side end wall; 221. assembly hole; 222. third limiting groove; 3. first rotating shaft; 4. connecting seat; 5. first fastener; 6. shaft sleeve; 7. clamping spring; 8. second fastener; 9. cover; 10. vehicle body; 01. vehicle head body; 02. hook lock module; 021. hook lock mechanism; 03. limiting structure; 031. first limiting groove; 0311. first retaining wall; 0312. second retaining wall; 032. protrusion; 033. avoidance groove; 04. first swinging member; 06. bearing; 061. bearing outer ring; 0611. second limiting groove; 06111. third retaining wall; 06121. fourth retaining wall; 062. bearing inner ring; 07. second swinging member; 08. third fastener; 09. avoidance space; 010. shaft sleeve fastener; 011. fourth fastener; 012. fifth fastener.

### DETAILED DESCRIPTION OF THE EMBODIMENTS

The following, in conjunction with the accompanying drawings, provides a clear and complete description of the technical solutions in the embodiments of the present application. Obviously, the embodiments described are only some rather than all of the embodiments of the present application. All other embodiments obtained by those skilled in the art based on the embodiments of the present application without inventive effort are within the scope of the present application.

The present application provides a vehicle head structure that facilitates quick disassembly by maintenance personnel, improving assembly and disassembly efficiency and simplifying operational steps.

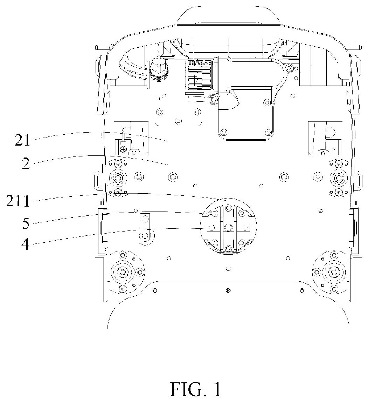

Referring to FIG. 1 to FIG. 3, an embodiment of the present application provides a vehicle head structure, including a yard function actuator 1, a mounting frame 2, a first rotating shaft 3 and a connecting seat 4.

The yard function actuator 1 is configured to perform yard maintenance functions, including, but not limited to, mowing, snow sweeping, and leaf blowing, which can be configured according to actual needs.

The first rotating shaft 3 is rotatably connected to the mounting frame 2. The connecting seat 4 is provided at the first rotating shaft 3, and rotates synchronously with the first rotating shaft 3.

In this way, the rotation function of the yard function actuator 1 can be realized. The yard function actuator 1 can rotate with the first rotating shaft 3 as the rotating shaft, which makes it easier for the yard function actuator 1 to adapt to different terrains and optimize the courtyard function execution effect.

A first fastener 5 is provided between the yard function actuator 1 and the connecting seat 4 for detachable connection. An access hole 211 is provided in the mounting frame 2 and aligned with the first fastener 5. External force can be applied to disassemble and assemble the first fastener 5 through the access hole 211.

Before this embodiment was adopted, when maintenance personnel needed to repair the yard function actuator 1, they need to remove the first rotating shaft 3 and other components from the mounting frame 2, and then separate the yard function actuator 1. After the repair is completed, the first rotating shaft 3 and other components have to be reinstalled on the mounting frame 2. However, the maintenance personnel do not need to repair the first rotating shaft 3 and other components. Therefore, after adopting this embodiment, the first fastener 5 is provided between the yard function actuator 1 and the connecting seat 4 for detachable connection, and the first fastener 5 is exposed to the outside by providing the access hole 211, so that maintenance personnel can remove the first fastener 5 manually or by using a tool through the access hole 211, thereby separating the yard function actuator 1 and the connecting seat 4. Maintenance personnel can directly remove the yard function actuator 1 without having to remove the first rotating shaft 3 from the mounting frame 2. When resetting after maintenance, external force can similarly act on the first fastener 5 through the access hole 211 to lock the yard function actuator 1 and the connecting seat 4, which can simplify the disassembly and assembly process. This embodiment has a simple structure and low cost, which is convenient for maintenance personnel to disassemble and install, avoiding unnecessary operating procedures.

In an embodiment, the mounting frame 2 can be connected to an external structure, such as the vehicle body 10.

In an embodiment, the first fastener 5 can be, but is not limited to, a screw, a locating pin, a snap fastener, or the like. In an embodiment, the number of first fasteners 5 can be set based on actual connection stability requirements.

In an embodiment, the first rotating shaft 3 and the connecting seat 4 can be fixedly connected or detachably connected. For example, the first rotating shaft 3 and the connecting seat 4 are welded together.

In some embodiments, as shown in FIG. 1, the first fastener 5 is a screw with its head facing the access hole 211. The screw secures the yard function actuator 1 to the connecting seat 4. When disassembly is required, maintenance personnel can remove the screw from the outside by using a tool through the access hole 211 to separate the yard function actuator 1 and the mounting frame 2.

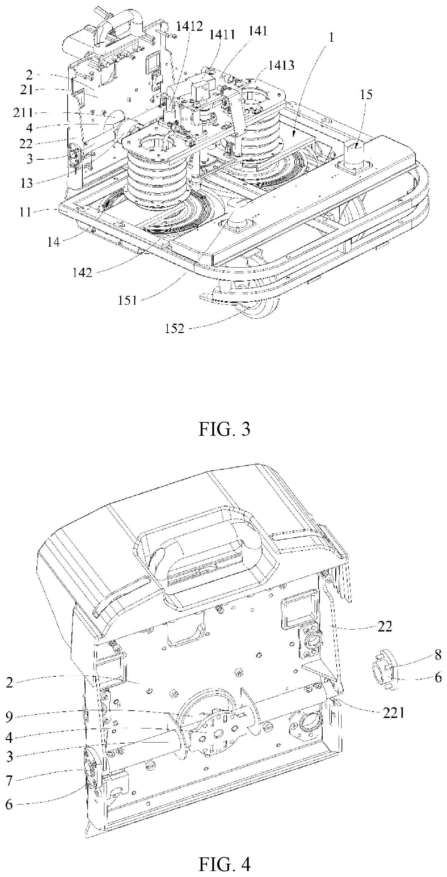

In some embodiments, please refer to FIG. 3 to FIG. 5, the mounting frame 2 includes a rear end wall 21 and two side end walls 22 connected to the left and right sides of the rear end wall 21. The access hole 211 is provided at the rear end wall 21. Both ends of the first rotating shaft 3 are rotatably connected to the two side end walls 22 respectively. The first rotating shaft 3 can rotate with respect to the mounting frame 2, and the connecting seat 4 and the first rotating shaft 3 rotate synchronously, so that the yard function actuator 1 can pitch and swing. When the vehicle head structure moves on uneven ground, the yard function actuator 1 can swing up and down under the action of external force to adapt to different terrains, thereby improving the adaptability of the vehicle head structure.

In some embodiments, as shown in FIG. 4, shaft sleeves 6 are provided on both side end walls 22, and the ends of the first rotating shaft 3 are rotatably inserted into the two shaft sleeves 6. The shaft sleeves 6 provide support, making the rotation of the yard function actuator 1 more stable and reliable, protecting the first rotating shaft 3 from unnecessary external damage, ensuring the correct position of the first rotating shaft 3, and providing the yard function actuator 1 with more stable rotation performance.

In some embodiments, as shown in FIG. 4, both ends of the first rotating shaft 3 are recessed to form clamping slots, which hold clamping springs 7. The clamping springs 7 press against the shaft sleeve 6 to axially limit the first rotating shaft 3. A second fastener 8 is provided at the shaft sleeve 6, and locks the shaft sleeve 6 to the side end wall 22.

Furthermore, the diameters of the two ends of the first rotating shaft 3 decrease and are inserted into the two shaft sleeves 6, respectively.

In some embodiments, as shown in FIG. 4, to facilitate installation of the first rotating shaft 3 and the shaft sleeve 6, the side end wall 22 is provided with an assembly hole 221, which extends forward to communicate with the outside.

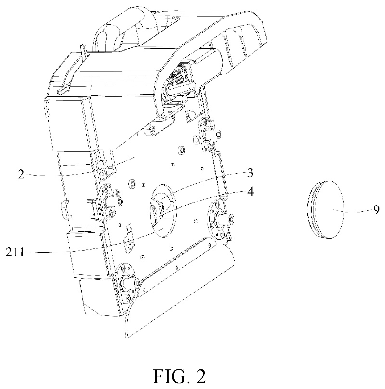

In some embodiments, as shown in FIG. 2 and FIG. 4, a detachable cover 9 is provided at the access hole 211. The cover 9 is configured to prevent foreign matter from entering the vehicle head structure from the outside.

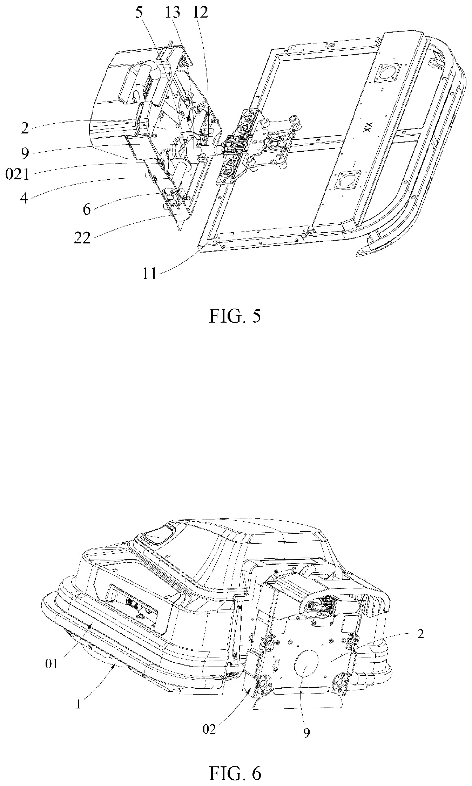

In some embodiments, as shown in FIG. 5, a second rotating shaft 12 is provided at the end of the yard function actuator 1 facing the connecting seat 4. The second rotating shaft 12 extends in the front-to-back direction. A bearing 13 is provided between the second rotating shaft 12 and the connecting seat 4 for rotational connection, and a first fastener 5 secures the bearing 13 to the connecting seat 4. In this way, the second rotational degree of freedom of the yard function actuator 1 can be achieved. The yard function actuator 1 can swing left and right around the second rotating shaft 12 as the rotating shaft. The first rotational degree of freedom is pitching and swinging about the first rotating shaft 3. When the vehicle head structure moves on uneven ground, the yard function actuator 1 can swing left and right and up and down under the action of external force to adapt to different terrains, further improving the adaptability of the vehicle head structure.

The bearing 13 is configured to reduce rotational friction and ensure smoother rotation. In some embodiments, as shown in FIG. 5, the outer ring of bearing 13 is detachably connected to connecting seat 4, that is, the first fastener 5 locks the outer ring of bearing 13 to connecting seat 4. The inner ring of bearing 13 is plugged into the second rotating shaft 12, and the outer and inner rings of the bearing 13 rotate with respect to each other.

In some embodiments, as shown in FIG. 1 and FIG. 5, the yard function actuator 1 includes a bracket 11. The second rotating shaft 12 is connected to the bracket 11 at one end away from the bearing 13. The second rotating shaft 12 rotates synchronously with the bracket 11. The bracket 11 can be configured to carry various functional modules, such as a mowing module 14.

In some embodiments, as shown in FIG. 3, the bracket 11 is provided with a mowing module 14. The mowing module 14 includes a first lifting mechanism 141 and a cutter disc unit 142. The first lifting mechanism 141 is provided at the bracket 11 and is connected to and controls the raising and lowering of the cutter disc unit 142.

The cutter disc unit 142 is configured to rotate and cut grass, fulfilling the mowing function of the vehicle head structure. The first lifting mechanism 141 is configured to control the height of the cutter disc unit 142 to meet user requirements for cutting different grass heights.

In some embodiments, as shown in FIG. 3, the first lifting mechanism 141 includes a first drive device 1411, a guide structure 1412, and a lifting frame 1413. The first drive device 1411 connects to and controls the lifting of the lifting frame 1413, and the cutter disc unit 142 is connected to the lifting frame 1413, thereby controlling the lifting and lowering of the cutter disc unit 142. The guide structure 1412 is provided at the bracket 11, and the lifting frame 1413 is slidably connected to the guide structure 1412. Driven by the first drive device 1411, the lifting frame 1413 slides up and down along the guide structure 1412.

In an embodiment, the first drive device 1411 can include a first motor and a threaded member. The first motor is connected to and controls the rotation of the threaded member. A nut member is sleeved on the threaded member, and the threaded member is threaded to the nut member. The nut member is fixedly connected to the lifting frame 1413. When the first motor drives the threaded member to rotate, the nut member and the lifting frame 1413 as a whole move up and down along the threaded member. Since the first motor rotates continuously, the position of the nut member and the lifting frame 1413 as a whole within the guide structure 1412 can be continuously and infinitely adjusted, thereby achieving the infinite height adjustment function of the mowing module 14.

The guide structures 1412 can be columnar, and their number can be adjusted based on actual needs. To improve lifting stability, multiple guide structures 1412 can be distributed circumferentially around the outer periphery of the threaded member, providing greater balance and stability. During mowing, if the lawn is uneven, the cutter disc unit 142 may accidentally cut into dirt or other debris. Multiple guide structures 1412 can mitigate the impact force on the cutter disc unit 142, improving stability and preventing damage to the mowing module 14.

In some embodiments, the cutter disc unit 142 may include a second drive mechanism and a cutter head. The second drive mechanism is connected to the lifting frame 1413, and the output end of the second drive mechanism is connected to the cutter head. The second drive mechanism controls the rotation of the cutter head, thereby achieving the rotary mowing function of the cutter head.

In some embodiments, as shown in FIG. 3, the bracket 11 is provided with a moving wheel module 15. The moving wheel module 15 includes a second lifting mechanism 151 and a moving wheel 152. The moving wheel 152 is configured to roll on the ground. The second lifting mechanism 151 is provided at the bracket 11 and is connected to and controls the moving wheel 152 to move up and down, thereby achieving a height adjustment function of the moving wheel 152.

In an embodiment, the bracket 11 is frame-shaped, with its rear end connected to the second rotating shaft 12. A first lifting mechanism 141 and two sets of cutter disc units 142 are provided at the bracket 11. The first lifting mechanism 141 is connected to and controls the two sets of cutter disc units 142 to move up and down. The bracket 11 is also provided with two sets of moving wheel modules 15, and the two sets of moving wheel modules 15 are located in front of the two sets of cutter disc units 142.

In an embodiment, an elastic member may be provided at the mounting frame 2, and connected to the bracket 11. The elastic member provides a pulling force for the bracket 11 toward the mounting frame 2, thereby reducing the interaction force between the vehicle head structure and the ground.

In some embodiments, as shown in FIG. 6, the vehicle head structure includes a vehicle head body 01 and a hook lock module 02. The vehicle head body 01 is provided with the aforementioned yard function actuator 1, and the hook lock module 02 is provided with the aforementioned mounting frame 2. As shown in FIG. 5, the hook lock module 02 is provided with a hook lock mechanism 021, and the hook lock mechanism 021 is configured to lock and connect with an external device, such as the vehicle body 10. On the one hand, the hook lock module 02 can facilitate the detachable connection between the vehicle head structure and external device. On the other hand, the first fastener 5 is provided between the yard function actuator 1 and the connecting seat 4 for detachable connection, and the first fastener 5 is exposed to the outside by providing the access hole 211. This solution can facilitate the separation of the hook lock module 02 from the vehicle head body 01 and improve the modularity of the hook lock module 02. As an example, a latch is provided at the vehicle body 10, and the latch can be inserted into the hook lock module 02. The hook lock mechanism 021 locks the latch, thereby realizing the connection function between the hook lock module 02 and the vehicle body 10.

The present application also provides a vehicle head structure that can be applied to devices such as yard robots. This avoids the situation where the overall size of the yard robot is too large due to the large rotation range of the vehicle head body 01.

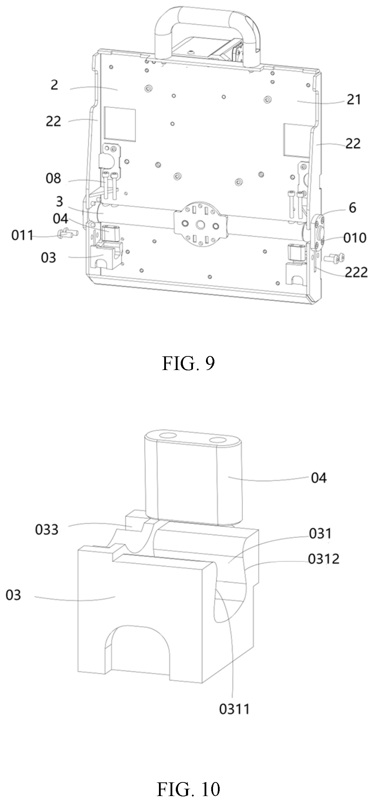

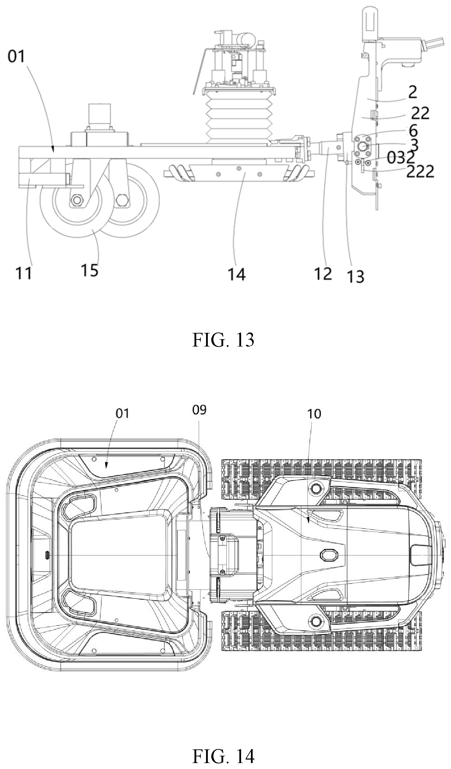

An embodiment of the present application provides a vehicle head structure, as shown in FIG. 9 and FIG. 13, including a mounting frame 2, a first rotating shaft 3, and a vehicle head body 01.

The first rotating shaft 3 is rotatably connected to the mounting frame 2. The vehicle head body 01 is connected to the first rotating shaft 3, and the vehicle head body 01 and the first rotating shaft 3 rotate synchronously. The first fastener 5 is provided between the yard function actuator 1 and the connecting seat 4 for detachable connection, and the connecting seat 4 is provided at the first rotating shaft 3.

A first swinging member 04 is provided at the first rotating shaft 3, and rotates with the first rotating shaft 3.

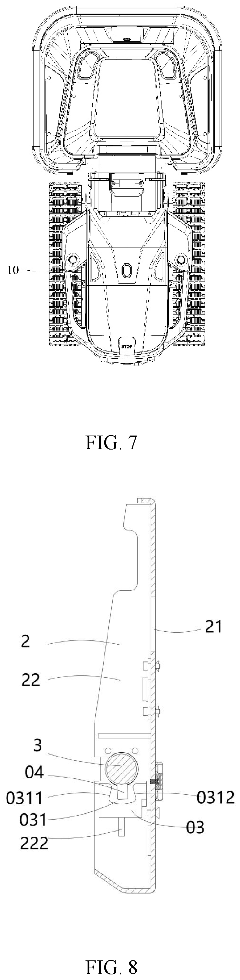

The mounting frame 2 is provided with a limit structure 03. As shown in FIG. 8, the limit structure 03 is formed with a first retaining wall 0311 and a second retaining wall 0312 spaced apart.

The first swinging member 04 is located between the first retaining wall 0311 and the second retaining wall 0312. The first retaining wall 0311 and the second retaining wall 0312 cooperate to limit the rotational range of the first swinging member 04.

When this embodiment is applied to a device such as a yard robot, if the vehicle head body 01 has a tendency to swing greatly under the action of external force, the first swinging member 04 abuts against the first retaining wall 0311 or the second retaining wall 0312, thereby limiting the rotation of the first swinging member 04 and ensuring that the vehicle head body 01 remains within the permitted rotational angle range.

The angle between the first retaining wall 0311 and the second retaining wall 0312 can be adjusted according to actual needs, thereby controlling the first swinging member 04 to rotate within the desired angle range.

In an embodiment, to adapt to most ground undulations while ensuring a smaller avoidance space 09, the angle between the first retaining wall 0311 and the second retaining wall 0312 is between 20° and 40°. In an embodiment, the angle between the first retaining wall 0311 and the second retaining wall 0312 is 30°. In some embodiments, with the initial position of the first swinging member 04 as zero degrees, the first swinging member 04 can swing forward by 15° and backward by 15°.

In this embodiment, the rotation range of the first swinging member 04 is limited by the limiting structure 03, thereby limiting the rotation range of the vehicle head body 01. Since the ground surface, such as a lawn, on which the yard robot travels is generally of limited undulation, the vehicle body 01 does not need to swing significantly to adapt. Therefore, by limiting the rotation range of the vehicle head body 01, the need for the vehicle head body 01 to adapt to undulating ground is satisfied while preventing the vehicle head body 01 from rotating significantly with respect to the vehicle body 10. Furthermore, while ensuring non-interference between the vehicle head body 01 and the vehicle body 10, the required avoidance space 09 between the two can be reduced (see FIG. 14). This reduces the gap between the vehicle head body 01 and the vehicle body 10, preventing the overall size of the yard robot from being too large.

On the other hand, when the rotation angle between the vehicle head body 01 and the vehicle body 10 tends to exceed the range, the limiting structure 03 can be used to provide structural support, limiting the rotation range of the first swinging member 04, and thus providing protection. For example, when the yard robot collides with an external object, the vehicle head body 01 and the vehicle body 10 bend, and the limiting structure 03 is subjected to force, preventing the vehicle head body 01 and the vehicle body 10 from bending excessively, thus providing protection. For another example, when the yard robot is lifted, the vehicle head body 01 and the vehicle body 10 rotate relative to each other, limiting the rotation range of the first swinging member 04, preventing the vehicle head body 01 and the vehicle body 10 from bending excessively, thus providing protection.

In an embodiment, the vehicle head body 01 can be equipped with various garden function modules as needed. These modules can be used for, but are not limited to, mowing, snow removal, and leaf blowing.

In some embodiments, as shown in FIG. 8 to FIG. 12, the limiting structure 03 is provided with a first limiting groove 031, and a first retaining wall 0311 and a second retaining wall 0312 are formed on the walls of the first retaining groove 031. The first swinging member 04 is located and swings within the first limiting groove 031.

As shown in FIG. 10, the first limiting groove 031 can be similar to a fan-shaped groove, and the first retaining wall 0311 and the second retaining wall 0312 are located on the front and rear walls of the first limiting groove 031, respectively.

In other embodiments, the limiting structure 03 can be two blocks, and the two blocks are provided at the mounting frame 2. The two blocks are spaced apart from the first swinging member 04, and the first swinging member 04 is located between the two blocks. The two blocks are configured to abut against the first swinging member 04, thereby limiting its rotational range. The limiting structure 03 can also be configured in other forms, as long as it limits the rotational range of the first swinging member 04, and will not be described in detail here.

In some embodiments, the mounting frame 2 includes a rear end wall 21 and two side end walls 22 connected to the left and right ends of the rear end wall 21. The first rotating shaft 3 is rotatably connected to the two side end walls 22 at both ends. The first rotating shaft 3 and the vehicle head body 01 perform pitching and oscillation synchronously.

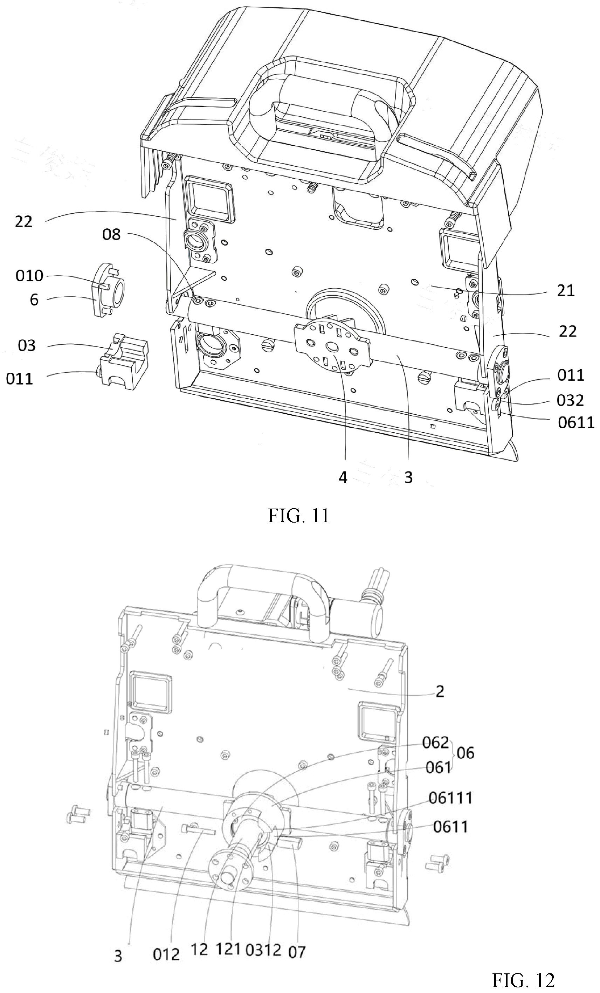

In other embodiments, as shown in FIG. 11 and FIG.13, a third limiting groove 222 is provided at the side end wall 22. The limiting structure 03 is formed with a protrusion 032, and the protrusion 032 is located within the third limiting groove 222. The third limiting groove 222 limits the displacement of the protrusion 032 in the front-to-back direction. The third limiting groove 222 is configured to limit the rotation of the protrusion 032 in the front-to-back direction and distribute the force, so that the limiting structure 03 is more securely located on the side end wall 22.

In an embodiment, as shown in FIG. 9, a fourth fastener 011 is provided at the side end wall 22 to secure the limiting structure 03 to the side end wall 22. The third limiting groove 222 distributes the force applied to the fourth fastener 011. The fourth fastener 011 may be, but is not limited to, a screw.

As an example, two fourth fasteners 011 are provided, and are respectively located at the front and rear sides of the third limiting groove 222. The two fourth fastener 011 are fixed to the side end wall 22.

In an embodiment, to facilitate assembly of the limiting structure 03, the third limiting groove 222 is a strip groove extending along the vertical direction. During installation, the protrusion 032 of the limiting structure 03 can slide upward along the third limiting groove 222 until it reaches the assembly position.

In some embodiments, referring to FIG. 10 and FIG. 11, both side end walls 22 are provided with assembly holes 221, each of which is provided with the shaft sleeve 6. The shaft sleeve 6 is provided with a shaft sleeve fastener 010, and the shaft sleeve fastener 010 locks the shaft sleeve 6 on the side end wall 22. In an embodiment, the limiting structure 03 is located at the bottom of the shaft sleeve 6, and the shape of the top of the limiting structure 03 is adapted to the shape of the shaft sleeve 6, making the overall structure compact and reducing the occupied space. The top of the limiting structure 03 can provide partial support for the shaft sleeve 6. The top of the limiting structure 03 can be provided with an avoidance groove 033 for the shaft sleeve fastener 010 to enter.

In some embodiments, as shown in FIG. 9, the first rotating shaft 3 is recessed to form a first positioning groove, and the shape of the first positioning groove is adapted to the first swinging member 04. The first swinging member 04 is inserted into the first positioning groove. A third fastener 08 is provided at the first rotating shaft 3. The third fastener 08 fixes the first swinging member 04 in the first positioning groove. The first positioning groove is configured to position the first swinging member 04 and distribute the force. This prevents the first swinging member 04 from being loosened or disengaged due to impact when the first swinging member 04 abuts against the first retaining wall 0311 and the second retaining wall 0312, thereby improving the stability and reliability of the first swinging member 04.

Furthermore, the first swinging member 04 is welded to the edge of the first positioning groove to enhance stability and improve the strength. The third fastener 08 can also be connected to the first rotating shaft 3 using electric welding to prevent the third fastener 08 from rotating and loosening, providing greater safety and reliability.

In some embodiments, referring to FIG. 9 and FIG. 10, a first swinging member 04 is provided at the first rotating shaft 3, and a bearing 06 is provided at the first swinging member 04. The bearing 06 includes a bearing outer ring 061 and a bearing inner ring 062, which are rotatable relative to each other. The bearing outer ring 061 is connected to the first swinging member 04. A second rotating shaft 12 is provided at the end of the vehicle head body 01 facing the first rotating shaft 3, and is inserted into the bearing inner ring 062. This allows the vehicle head body 01 to achieve a second rotational degree of freedom, allowing the vehicle head body 01 to swing left and right about the second rotating shaft 12. The first rotational degree of freedom is pitching about the first rotating shaft 3. When the vehicle head structure moves on uneven ground, the vehicle head body 01 can swing left and right and up and down under the action of external force to adapt to different terrains, further improving the adaptability of the vehicle head body 01 to uneven terrain.

Furthermore, the second swing member 07 is welded to the edge of the second positioning groove 121 to enhance stability and increase the strength. The fifth fastener 012 and the second rotating shaft 12 can also be connected by electric welding to prevent the fifth fastener 012 from rotating and loosening, which is safer and more reliable.

In some embodiments, a third retaining wall 06111 and a fourth retaining wall 06121 are formed circumferentially at the bearing outer ring 061. A second swinging member 07 is provided at the second rotating shaft 12, and located between the third retaining wall 06111 and the fourth retaining wall 06121. The third retaining wall 06111 and the fourth retaining wall 06121 cooperate to limit the rotational range of the second swinging member 07.

Similarly, in this embodiment, the third retaining wall 06111 and the fourth retaining wall 06121 limit the rotational range of the second swinging member 07, thereby limiting the rotational range of the vehicle head body 01 in the left-right direction. The first retaining wall 0311 and the second retaining wall 0312 limit the rotational range of the vehicle head body 01 in the pitch direction. Since the undulation of the ground is limited, the vehicle head body 01 does not need to swing significantly to adapt to it. Therefore, by limiting the rotation amplitude of the vehicle head body 01, the need for the vehicle head body 01 to adapt to the undulating ground can be met while avoiding the vehicle head body 01 from rotating significantly relative to the vehicle body 10. Furthermore, while the vehicle head body 01 and the vehicle body 10 do not interfere with each other in the left and right swing directions, the required avoidance space 09 between the two can be reduced, thereby narrowing the gap between the vehicle head body 01 and the vehicle body 10 and avoiding the overall size of the yard robot being too large.

In an embodiment, to adapt to most ground undulations while ensuring a relatively small avoidance space 09, the angle between the third retaining wall 06111 and the fourth retaining wall 06121 is between 20° and 40°. In an embodiment, the angle between the third retaining wall 06111 and the fourth retaining wall 06121 is 30°. In some embodiments, with the initial position of the second swinging member 07 as zero degrees, the second swinging member 07 can rotate within a range of plus or minus 15°.

In some embodiments, as shown in FIG. 12, the second rotating shaft 12 is recessed to form a second positioning groove 121. The shape of the second positioning groove 121 is adapted to the second swinging member 07, and the second swinging member 07 is inserted into the second positioning groove 121. A fifth fastener 012 is provided at the second rotating shaft 12 to fix the second swinging member 07 in the second positioning groove 121.

The second positioning groove 121 is configured to limit the second swinging member 07 and distribute the force to prevent the second swinging member 07 from loosening or detaching due to impact when the second swinging member 07 abuts against the third retaining wall 06111 and the fourth retaining wall 06121, thereby improving the stability and reliability of the second swinging member 07.

In some embodiments, two protrusions are formed to protrude outward at the bearing outer ring 061 in the axial direction, with a gap between the two protrusions. The gap between the two protrusions forms the second limiting groove 0611. The second swinging member 07 is located within the second limiting groove 0611, and the two groove walls in the circumferential direction of the second limiting groove 0611 serve as the third retaining wall 06111 and the fourth retaining wall 06121.

A yard robot according to an embodiment of the present application, as shown in FIG. 7 and FIG. 14, includes the vehicle head structure described in any of the above embodiments, and also includes a vehicle body 10. The vehicle head structure is detachably connected to the vehicle body 10, and the mounting frame 2 is connected to the vehicle body 10. The vehicle body 10 can be a wheeled or tracked self-moving body, and the vehicle body 10 can move independently and drive the vehicle head structure to move.

The above description are merely some embodiments of the present application and do not constitute any form of limitation to the present application. Although the present application has been disclosed as some embodiments as above, it is not intended to limit the present application. Those skilled in the art can make some changes or modifications to the equivalent embodiment using the above-disclosed technical content without departing from the scope of the technical solution of the present application. However, any simple modification, equivalent change and modification of the above embodiment based on the technical essence of the present application without departing from the content of the technical solution of the present application are still within the scope of the technical solution of the present application.

## Claims

1. A vehicle head structure, comprising:
a yard function actuator;
a mounting frame;
a first rotating shaft rotatably connected to the mounting frame; and
a connecting seat provided at the first rotating shaft and rotating synchronously with the first rotating shaft,
wherein a first fastener is provided between the yard function actuator and the connecting seat for a detachable connection; and
the mounting frame is provided with an access hole, and the access hole is aligned with the first fastener, allowing external force to be applied to disassemble and assemble the first fastener through the access hole.

2. The vehicle head structure of claim 1, wherein the mounting frame comprises a rear end wall and two side end walls connected to a left side and a right side of the rear end wall;
the access hole is provided at the rear end wall; and
two ends of the first rotating shaft are rotatably connected to the two side end walls.

3. The vehicle head structure of claim 2, wherein a shaft sleeve is provided at each of the two side end walls, and the two ends of the first rotating shaft are rotatably inserted into two shaft sleeves.

4. The vehicle head structure of claim 3, wherein each of the two ends of the first rotating shaft is recessed to form a clamping slot, and two clamping slots are provided with clamping springs; the clamping springs are configured to press against the shaft sleeve to axially limit the first rotating shaft.

5. The vehicle head structure of claim 3, wherein the yard function actuator is provided with a second rotating shaft at one end facing the connecting seat, and the second rotating shaft extends in a front-to-back direction; a bearing is provided between the second rotating shaft and the connecting seat for rotational connection, and the first fastener secures the bearing to the connecting seat.

6. The vehicle head structure of claim 5, wherein the yard function actuator comprises a bracket, the second rotating shaft is connected to the bracket at one end away from the bearing, and the second rotating shaft rotates synchronously with the bracket.

7. The vehicle head structure of claim 6, wherein a mowing module is provided at the bracket, and the mowing module comprises a first lifting mechanism and a cutter disc unit, the first lifting mechanism is provided at the bracket, and the first lifting mechanism is connected to the cutter disc unit and configured to control the cutter disc unit to raise and lower.

8. The vehicle head structure of claim 6, wherein the bracket is provided with a moving wheel module, the moving wheel module comprises a second lifting mechanism and a moving wheel, the second lifting mechanism is provided at the bracket and connected to the moving wheel, and the second lifting mechanism is configured to control the moving wheel to raise and lower.

9. The vehicle head structure of any one of claims 1 to 8, wherein the access hole is detachably provided with a cover.

10. A vehicle head structure, comprising:
a yard function actuator;
a connecting seat;
a mounting frame;
a first rotating shaft rotatably connected to the mounting frame; and
a vehicle head body connected to the first rotating shaft and rotating synchronously with the first rotating shaft,
wherein a first fastener is provided between the yard function actuator and the connecting seat for detachable connection, and the connecting seat is provided at the first rotating shaft;
a first swinging member is provided at the first rotating shaft and rotates along with the first rotating shaft;
the mounting frame is provided with a limit structure, and the limit structure is formed with a first retaining wall and a second retaining wall spaced apart from each other; the first swinging member is located between the first retaining wall and the second retaining wall, and the first retaining wall and the second retaining wall cooperate to limit a rotational range of the first swinging member.

11. The vehicle head structure of claim 10, wherein the limiting structure is recessed to form a first limiting groove, and the first retaining wall and the second retaining wall are formed at a wall of the first limiting groove;
the first swinging member is located in the first limiting groove and swings within the first limiting groove.

12. The vehicle head structure of claim 10, wherein the mounting frame comprises a rear end wall and two side end walls connected to a left end and a right end of the rear end wall; and
the first rotating shaft has two ends rotatably connected to the two side end walls.

13. The vehicle head structure of claim 12, wherein a third limiting groove is provided on the side end wall, and a protrusion is formed at the limiting structure; the protrusion is located in the third limiting groove, and the third limiting groove restricts displacement of the protrusion in a front-to-back direction.

14. The vehicle head structure of claim 13, wherein a fourth fastener is provided at the side end wall, and the fourth fastener fixes the limiting structure to the side end wall.

15. The vehicle head structure of claim 10, wherein the first rotating shaft is recessed to form a first positioning groove, and a shape of the first positioning groove is adapted to the first swinging member; the first swinging member is inserted into the first positioning groove, and a third fastener is provided at the first rotating shaft; the third fastener fixes the first swinging member in the first positioning groove.

16. The vehicle head structure of any one of claims 10 to 15, wherein a connecting seat is provided at the first rotating shaft, and a bearing is provided at the connecting seat; the bearing comprises a bearing outer ring and a bearing inner ring that are rotatable relative to each other, and the bearing outer ring is connected to the connecting seat; the vehicle head body is provided with a second rotating shaft at one end facing the first rotating shaft, and the second rotating shaft is inserted into the bearing inner ring.

17. The vehicle head structure of claim 16, wherein a third retaining wall and a fourth retaining wall are formed circumferentially at the bearing outer ring; a second swinging member is provided at the second rotating shaft, and the second swinging member is located between the third retaining wall and the fourth retaining wall; the third retaining wall and the fourth retaining wall cooperate to limit a rotational range of the second swinging member.

18. The vehicle head structure of claim 17, wherein the second rotating shaft is provided with a second positioning groove, and a shape of the second positioning groove is adapted to the second swinging member; the second swinging member is inserted into the second positioning groove, and the second rotating shaft is provided with a fifth fastener; the fifth fastener fixes the second swinging member in the second positioning groove.

19. A yard robot, comprising: the vehicle head structure of any one of claims 1 to 18 and a vehicle body, wherein the vehicle head structure is detachably connected to the vehicle body, and the mounting frame is connected to the vehicle body.
